# EUROPEAN PATENT APPLICATION

(11) **EP 2 472 152 A1**
(43) Date of publication of application: **04.07.2012**
(21) Application number: 10425398.4
(22) Date of filing: 28.12.2010
(51) Int. Cl.: F16K 31/06

(54) **A method of regulating the flow rate of a gaseous fluid and a valve device for implementing the method**

(71) Applicant: Gruppo Cimbali S.p.A., 20082 Binasco (MI) (IT)
(72) Inventor: Maver, Marino, 20082 Binasco MI (IT)
(74) Representative: Perani, Aurelio

(57) **Abstract**

A valve device for regulating the flow-rate of a gaseous fluid comprises a tubular body (8) provided with an internal cavity (11), an inlet opening (40), an outlet opening (25), a connecting path (35,32,33) formed in the cavity (11), as well as a calibrator element (38) which can be inserted in and removed from a portion (35) of the connecting path and which can vary the cross-section thereof for the flow of the fluid by means of control members that are controlled by a control unit (61). The control members comprise a coil (19) with a respective ferromagnetic core (20). The connecting path is formed at least partly in the electromagnet core (20) which is movable inside the cavity (11). The calibrator element (38) is positioned in the part (35) of the connecting path which is formed in the core (20), the core being movable relative to the calibrator element (38) between a first position and a second position as a result of the activation and de-activation of the coil (19), determining respective cross-sections for the flow of the fluid, each having a respective area value.

## Description

The present invention relates to a method of regulating the flow-rate of a gaseous fluid which is directed to a user and flows through a valve device that comprises an internal connecting path between an inlet and an outlet, the regulation being controlled by an electronic control unit.

The invention also relates to a valve device for regulating the flow-rate of a gaseous fluid, for implementing the method indicated above, the valve device comprising a tubular body provided with an internal cavity, an inlet opening for the fluid flowing into the cavity, an outlet opening for the fluid coming out of the cavity, a connecting path formed in the cavity between the inlet opening and the outlet opening, as well as a calibrator element which can be inserted in and removed from a portion of the connecting path and which can vary the cross-section thereof for the flow of the fluid, by means of control members that are controlled by a control unit. Preferably, the control members are electromagnetic and the control unit is electronic.

The gaseous fluid comprises both steam and ambient air, preferably compressed ambient air, which are directed to a user, preferably but not exclusively in an espresso coffee-making machine.

In the design of an espresso coffee-making machine, the means that are used for controlling the flow of the fluids which contribute to the preparation of the many beverages that can be prepared by apparatus of this type are particularly important. As a result of the increasingly widespread use of ever more automated apparatus which can supply an ever greater variety of beverages such as espresso coffee, cappuccino, chocolate, and frothed and flavoured milk, both hot and cold, there is an ever increasing need to be able to control the temperature, flow-rate and pressure of fluids such as water, milk, steam and air which make up the recipe for each beverage.

In particular, as far as the control of flow-rates is concerned, the measures used vary from the use of simple nozzles with calibrated holes, to valves with adjustable passageways, up to the use of very expensive proportional solenoid valves controlled by suitable electronic programs which act on their electrical supply voltage.

An example of a flow-rate regulator device according to the prior art which is designed for calibrating gas flows, in particular air-flows, comprises a hollow body with an inlet connector and an outlet connector which are connected by a calibrated duct inside which there is a hollow, frustoconical plunger-type calibrator arranged at the end of an adjustment screw. The flow-rate of the air flow is calibrated to the desired value by operating the screw so as to advance or retract the frustoconical plunger along the axis of the duct in which it is fitted.

The good operation of this known device is sometimes upset by the presence of condensation water. As is known, in the circuits downstream of a compressor, the moisture that is present in the air condenses as a result of the increase in pressure to which it is subjected. Since condensed water has a greater viscosity than air it flows with difficulty through the passageway of circular, ring-shaped cross-section that is formed between the outer wall of the conical plunger and the inner wall of the duct in which it is fitted.

As a result, until the air impelled by the compressor manages to expel from the duct all of the condensate that has formed, it cannot flow towards the outlet opening to reach the user for which it is intended, for example, a jug containing milk to be frothed and possibly also to be heated by the steam coming from the boiler of the coffee machine.

This problem generally causes an alteration in the time that has been pre-established in the process for the supply of the air relative to the time pre-established for the supply of another fluid to be mixed with the air, for example, relative to the time for the supply of steam in a process for the preparation of a quantity of frothed and heated milk.

The objective of the present invention is to overcome the problems discussed with reference to the above-mentioned regulation devices of the prior art, particularly but not exclusively those problems that are connected with the formation of condensate water originating from the ambient air, which is pumped by a compressor, as it flows through narrow calibrated sections of a duct.

This objective is achieved by a method of regulating the flow-rate of a gaseous fluid according to appended Claim 1, and by means of a valve device according to Claim 6, also appended.

The invention will be described in greater detail with reference to a practical embodiment thereof which is described purely by way of non-limiting example and illustrated in the appended drawings, in which:
Figure 1 is a side view of the valve device according to the invention;
Figure 2 is a section through the valve device of

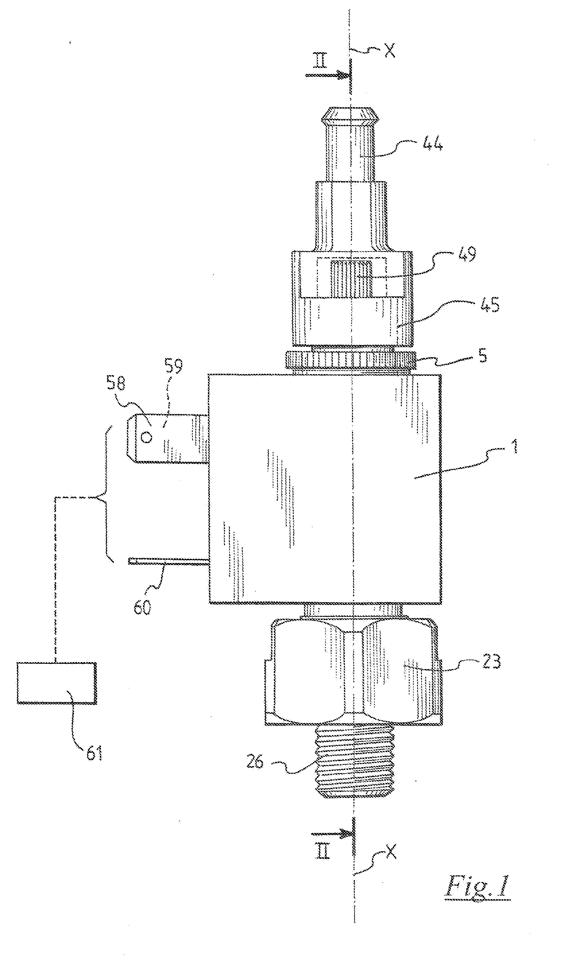

Figure 1, taken on the line II-II of Figure 1 with the core of the electromagnet in the position that is adopted when the coil is not energized;

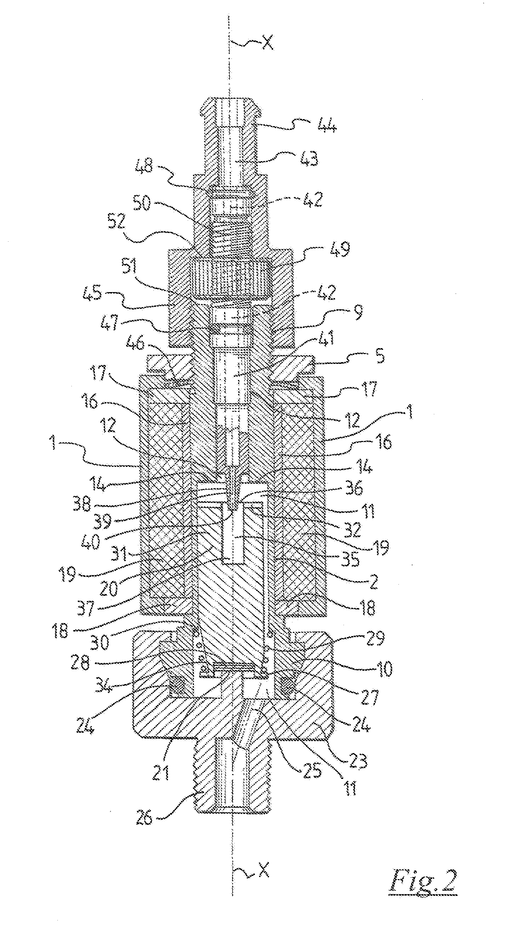

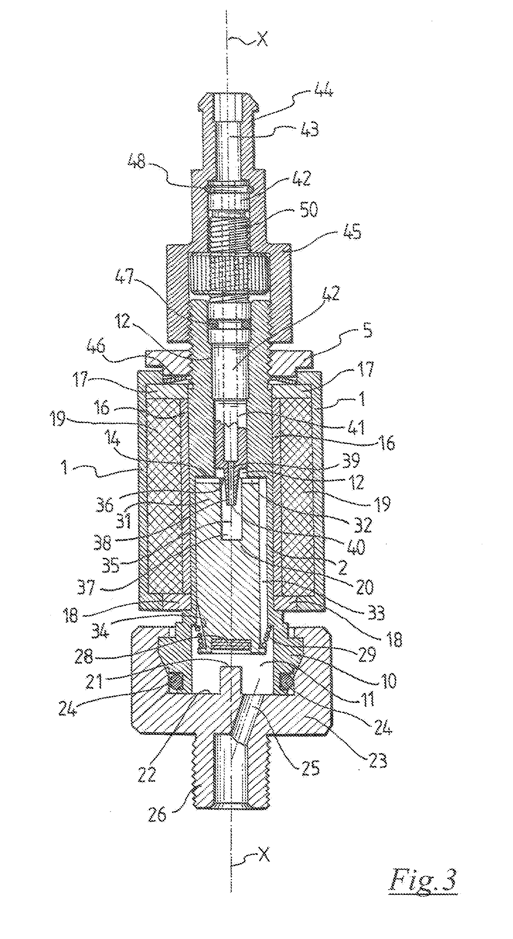

Figure 3 is a section similar to that of Figure 2 with the core of the electromagnet in the position that is adopted when the coil is energized;

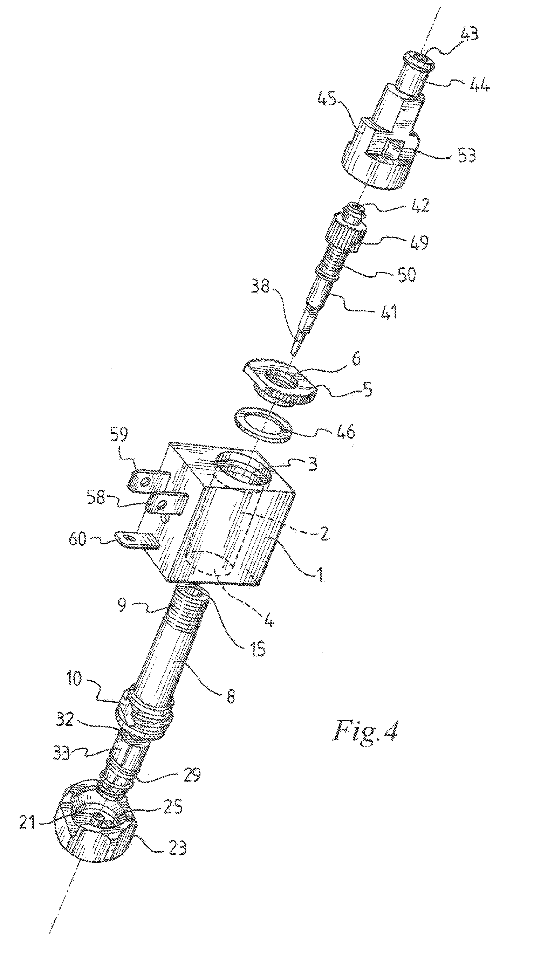

Figure 4 is a first exploded, perspective view of the components of the valve device of the preceding drawings; and

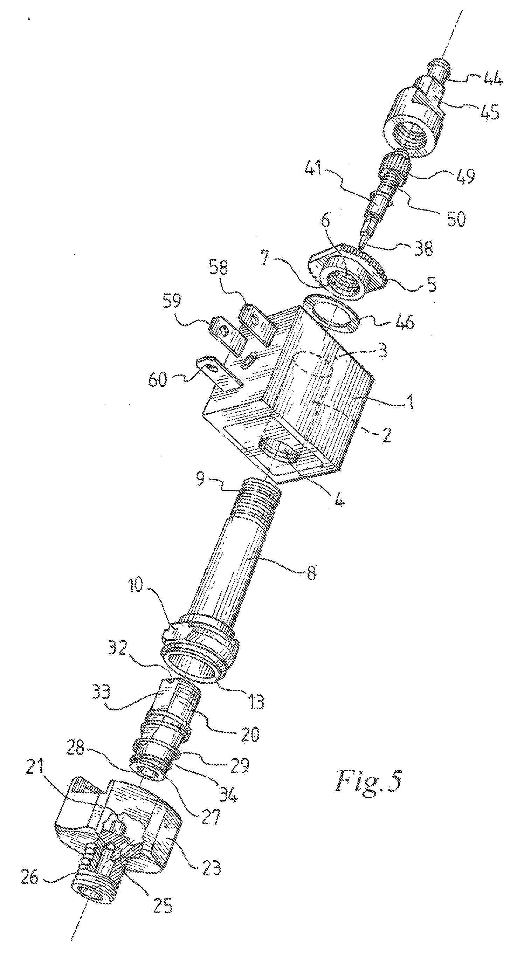

Figure 5 is a second exploded, perspective view of the components of the valve device of the preceding drawings.

With reference to the above-mentioned drawings, a box-like body suitable for containing the members of the valve device according to the invention is generally indicated 1.

The body defines an internal cavity 2 extending predominantly longitudinally along the axis X-X of the device with end openings 3 and 4. The opening 3 is closed by a cap 5 having an axial hole 6 inside which a thread 7 is formed.

A cylindrical body 8 is inserted in the cavity 2 through the opposite opening 4 of the box-like body 1 and has a threaded portion 9 at one end and a head 10 at the opposite end. The cylindrical body 8, together with the head 10, is provided, in its interior, with a first axial cavity 11 and a second axial cavity 12, the latter having a smaller diameter than the first axial cavity 11. Whereas the first axial cavity 11 extends inside the head 10 terminating in an opening 13, the second axial cavity 12 extends from an internal abutment 14 as far as an open end 15 of the threaded portion 9.

As can be seen in Figures 2 and 3, the cylindrical internal wall of the cavity 2 is delimited by a conventional reel 16 with end shoulders 17 and 18 on which an electromagnetic coil 19 is mounted.

A ferromagnetic core 20 is positioned so as to be slidable along the axis X-X inside the cavity 11 of the cylindrical body 8 and is movable between the abutment 14 which defines a first position for the core and a reference abutment 21 which defines a second position for the core. The reference abutment 21 projects from an internal base wall 22 of a cap 23.

The cap 23 is engaged on the head 10 and covers the opening 13 of the axial cavity 11 of the cylindrical body 8 with the interposition of a seal 24.

An outlet duct 25 extends through the internal base wall 22 and leads to the interior of a threaded connector 26.

An end 27 of the ferromagnetic core 20 is provided with a pad 28 by means of which it abuts the reference abutment 21 when the coil 19 is not energized and a helical spring 29 urges the core 20 towards that abutment.

The spring 29 is anchored, at one end, to the end 27 of the core 20 and, at the other end, reacts against an annular abutment 30 of the head 10.

The opposite end 31 of the ferromagnetic core 20, which is intended to abut the annular abutment 14 between the cavity 11 and the cavity 12 of the body 8, has a diametral or even purely radial groove 32 which is connected to a faceting 33 which extends axially along the core 20 as far as the vicinity of the end 27 where the core 20 has a tapered portion 34 around which the spring 29 is wound.

In the end 31 of the ferromagnetic core 20 there is a cylindrical blind hole 35 which has an opening 36 facing towards the abutment 14, and a closed base 37.

A calibrator element 38 is positioned axially in the blind hole 35.

The calibrator element 38 has an outer surface the diameter of which varies in the axial direction, particularly with a conical or even stepped configuration.

Alternatively, the external configuration of the calibrator element 38 may be cylindrical and the blind hole 35 may have a conical configuration.

The calibrator element 38 has an internal hollow duct 39 with an opening 40 which opens into the interior of the blind hole 35 and the calibrator element 38 is fitted on a rod-like support element 41.

The rod-like support element 41 also has an axial cavity 42 which is connected, at one end, to the duct 39 of the calibrator element 38 and, at the other end, to the internal duct 43 of a connector 44 forming part of a sleeve 45; the sleeve 45 is connected to the threaded portion 9 of the body 8 that projects from the cap 5 which closes the box-like body 1 and clamps the reel 16 of the electromagnetic coil 19 with the interposition of a resilient washer 46.

A first seal 47 is provided between the rod-like support 41 and the axial cavity 12 and a second seal 48 is positioned between the rod-like support 41 and the internal wall of the sleeve 45.

The rod-like support 41 is provided with a device for adjusting its axial position inside the cavity 12 in order to set the position of the calibrator element 38 relative to the tubular body 8, with reference to the abutment 14 which the end 31 of the ferromagnetic core 20 is intended to abut when the coil 19 is energized. This axial adjustment device comprises a ring nut 49 and a threaded portion 50 formed on the outer surface of the rod-like element 41 on which the ring nut is mounted.

The ring-nut 49 is positioned inside the sleeve 45 between an end 51 of the threaded portion 9 of the body 8 and an abutment 52 inside the sleeve 45.

The ring nut 49 can be operated by virtue of lateral openings 53 formed in the sleeve 45 which enable the outer surface of the ring-nut 49, which is preferably knurled, to be gripped. The rod-like support 41, and with it the calibrator element 38, can be moved in the cavities 11 and 12 of the tubular body 8 by rotation of the ring-nut 49.

The coil 19 is connected, in conventional manner, to terminals 58, 59 and 60 for the electrical supply thereof.

It will be appreciated from the foregoing description that a connecting path is defined between the inlet opening to the cavity 11, represented by the open end 40 of the calibrator element 38, and the outlet opening 25 from the cavity 11 and comprises the annular space between the blind hole 35 and the calibrator element 38, the radial groove 32, and the axial faceting 33 of the core 20.

The calibrator element 38 is inserted in this connecting path and penetrates the blind hole 35 more or less deeply according to the positions adopted by the core 20, and hence in dependence on whether or not the coil 19 is energized.

Since, as described above, the calibrator element 38 has a conical outer profile which is tapered towards its open end 40 or, alternatively, is provided with an outside diameter which decreases towards the open end 40, its various positions relative to the blind hole 35 determine different cross-sections for the flow of the gaseous fluid in transit from the inlet opening 40 towards the outlet opening 25.

In particular, when the coil 19 is not energized and the core 20 is therefore positioned against the abutment 21, the cross-section for the flow of the fluid is arranged so as to have an area greater than the area of the cross-section which is formed when, with the coil 19 energized, the core 20 is arranged against the abutment 14 which delimits the passageway between the axial cavity 11 and the axial cavity 12, as shown in Figure 3.

According to the invention, when the coil 19 is energized, the area of the cross-section of the connecting passageway between the inlet opening 40 and the outlet opening 25 of the valve device is determined on the basis of the amount of operative flow that is necessary for the user connected to the valve device, for example, a steam lance for heating and frothing a quantity of milk contained in a jug.

This value is established by adjustment of the position of the calibrator element 38 in the blind hole 35 by acting on the adjustment ring-nut 49 and taking into account the position adopted by the core 20 when the coil 19 is energized.

Once this operative cross-section for the passage of the flow has been established, movement of the core 20 as a result of the cessation of the energization of the coil 19 and under the action of the spring 29 leads to a change in the relative positions of the calibrator element 38 and the blind hole 35, in particular the movement of the base of the blind hole 35 away from the open end 40 of the calibrator element 38.

Consequently, since the calibrator element 38 has an outside diameter that varies, that is, a conical configuration, the cross-section that is created for the passage of the gaseous flow, particularly compressed air, has a larger area than it had with the previous operative position of the core 20.

With the valve device described above, it is thus possible to implement a method of regulating the flow-rate of a gaseous fluid, in particular compressed air, which permits the elimination of any condensates arising from moisture contained in the fluid when the flow is caused to pass through a regulation constriction.

The control of the method is entrusted to a conventional electronic control unit, schematically indicated 61 in Figure 1, which is also concerned with the activation and de-activation of the coil 19.

The gaseous flow is caused to pass for a predetermined period of time, usually a few fractions of a second or a few seconds, with the coil 19 in the de-activated condition and hence with the cross-section of the passageway for the flow regulated to its value which is larger than that which is necessary for the operative conditions of the user, thus allowing the air flow to eliminate any condensate that has accumulated in the calibrated passageway as a result of previous operations.

After this stage, the activation of the coil 19 modifies the cross-section for the flow of the fluid, bringing it to the value that is necessary for the operation of the user which is connected to the valve device, which value is thus less than that used for eliminating the condensate.

The air flow is passed through this flow cross-section for a further predetermined period of time which corresponds to that which is necessary for supplying a quantity of fluid suitable for performing the function required by the user, for example, for pumping air into the steam to heat and froth a given quantity of milk.

Upon completion of this last stage, the coil 19 is deenergized and the method provides either for the interruption of the flow by acting on the supply immediately, or for a further condensate elimination stage by causing the flow to pass through the increased flow cross-section.

## Claims

1. A method of regulating the flow-rate of a gaseous fluid which is directed to a user and flows through a valve device that comprises an internal connecting path (39, 35, 32, 33) between an inlet (40) and an outlet (25), the regulation being controlled by an electronic control unit (61), **characterized in that** it comprises the steps of:
- regulating the area of the cross-section for the flow of the fluid in the connecting path to a first value thereof;
- causing the gaseous fluid to flow through the cross-section of the connecting path, regulated to the first value, for a predetermined first period of time;
- varying the area of the flow cross-section in the connecting path by bringing it to a second value less than the first value; and
- causing the gaseous fluid to flow through the cross-section provided with the second area value for a predetermined second period of time.

2. A method according to Claim 1, **characterized in that** it further comprises the further steps of returning the value of the area of the cross-section for the flow of the gaseous fluid in the connecting path from the second value to the first value and causing the gaseous fluid to flow through the cross-section with the first area value for a third predetermined period of time.

3. A method according to Claim 1 and Claim 2 wherein the third predetermined period of time has a duration equal to that of the first period of time.

4. A method according to any one of Claims 1 to 4, **characterized in that** the second value to which the area of the cross-section for the flow of the gaseous fluid in the connecting path is regulated corresponds to that which determines the flow-rate of gaseous fluid which is required by the user to which the valve device (1) is connected, and the second value of the period of time is that which is necessary to provide the user with the required amount of fluid to perform and complete its function.

5. A method according to Claims 1 to 3 wherein the gaseous fluid passing through the connecting path is compressed ambient air.

6. A valve device for implementing the method of regulating the flow-rate of a gaseous fluid according to Claims 1 to 5, comprising a tubular body (8) provided with an internal cavity (11), an inlet opening (40) for the fluid flowing into the cavity (11), an outlet opening (25) for the fluid coming out of the cavity (11), a connecting path (35, 32, 33) formed in the cavity (11) between the inlet opening (40) and the outlet opening (25), as well as a calibrator element (38) which can be inserted in and removed from a portion (35) of the connecting path and which can vary the cross-section thereof for the flow of the fluid by means of control members that are controlled by a control unit (61), **characterized in that** the control members comprise a coil (19) of an electromagnet with a respective ferromagnetic core (20), **in that** the connecting path is formed at least partly (35, 32, 33) in the core (20), and **in that** the calibrator element (38) is positioned in the part (35) of the connecting path which is formed in the core (20), the core being movable relative to the calibrator element (38) between a first position and a second position as a result of the activation and de-activation of the coil (19), determining respective cross-sections for the flow of the fluid, each having a respective area value.

7. A valve device according to Claim 6, **characterized in that** the calibrator element (38) is mounted on a rod-like support (41) the axial cavity (42) of which forms part of an inlet duct for the fluid flowing into the cavity (11).

8. A valve device according to Claim 6 and Claim 7, **characterized in that** the calibrator element (38) is an axially hollow, rod-like element aligned with the axial cavity (42) of the support (41), to which it is connected by means of a first of its ends, and forms part of the duct for the inlet of the fluid into the cavity (11), into which it opens by means of its other, open end (40).

9. A valve device according to Claims 6 to 8, **characterized in that** the rod-like calibrator element (38) has a circular cross-section with an outside diameter which decreases towards its open end (40) with which it opens into the cavity (11).

10. A valve device according to Claim 9 wherein the outer surface of the calibrator element (38) is conical, tapering towards the open end (40).

11. A valve device according to Claims 6 to 10, **characterized in that** the portion of the connecting path between the inlet opening (40) and the outlet opening (25) of the cavity (11) that is formed in the core (20) of the electromagnet comprises a blind hole (35) which is arranged parallel to the axis (X-X) of the movement of the core (20) between the first and second positions and coaxial with the calibrator element (38), the latter being positioned in the blind hole (35) with clearance relative to a base (37) and to a side wall thereof.

12. A valve device according to Claims 6 to 11, **characterized in that** the support (41) of the calibrator element (38) is housed in an axial cavity (12) of the tubular body (8), is positioned parallel to the axis (X-X) of movement of the core (20) of the electromagnet, and is provided with means (49) for regulating its axial position relative to the core (20).

13. A valve device according to any one of Claims 6 to 12, **characterized in that** it comprises resilient means (29) acting on the core (20) of the electromagnet to urge it towards the second position (21) and to hold it therein when the coil of the electromagnet is not electrically activated, the resilient means (29) releasing the core (20) when the coil (19) is activated and the core(20) is moved axially to its first position (14).

14. A valve device according to Claim 13, **characterized in that** the core (20) is provided with an impact-absorbing pad (28) positioned in its end portion (27) facing towards the abutment (21).

## Amended claims

### Amended claims in accordance with Rule 137(2) EPC.

**1.** A valve device for regulating the flow-rate of a gaseous fluid comprising a tubular body (8) provided with an internal cavity (11), an inlet opening (40) for the fluid flowing into the cavity (11), an outlet opening (25) for the fluid coming out of the cavity (11), a connecting path (35, 32, 33) formed in the cavity (11) between the inlet opening (40) and the outlet opening (25), as well as a calibrator element (38) which can be inserted in and removed from a portion (35) of the connecting path and which can vary the cross-section thereof for the flow of the fluid by means of control members that are controlled by a control unit (61), **characterized in that** the control members comprise a coil (19) of an electromagnet with a respective ferromagnetic core (20), **in that** the connecting path is formed at least partly (35, 32, 33) in the core (20), and **in that** the calibrator element (38) is positioned in the part (35) of the connecting path which is formed in the core (20), the core being movable relative to the calibrator element (38) between a first position and a second position as a result of the activation and de-activation of the coil (19), determining respective cross-sections for the flow of the fluid, each having a respective area value.

**2.** A valve device according to Claim 1, **characterized in that** the calibrator element (38) is mounted on a rod-like support (41) the axial cavity (42) of which forms part of an inlet duct for the fluid flowing into the cavity (11).

**3.** A valve device according to Claim 2, **characterized in that** the calibrator element (38) is an axially hollow, rod-like element aligned with the axial cavity (42) of the support (41), to which it is connected by means of a first of its ends, and forms part of the duct for the inlet of the fluid into the cavity (11), into which it opens by means of its other, open end (40).

**4.** A valve device according to Claims 1 to 3, **characterized in that** the rod-like calibrator element (38) has a circular cross-section with an outside diameter which decreases towards its open end (40) with which it opens into the cavity (11).

**5.** A valve device according to Claim 4 wherein the outer surface of the calibrator element (38) is conical, tapering towards the open end (40).

**6.** A valve device according to Claims 1 to 5, **characterized in that** the portion of the connecting path between the inlet opening (40) and the outlet opening (25) of the cavity (11) that is formed in the core (20) of the electromagnet comprises a blind hole (35) which is arranged parallel to the axis (X-X) of the movement of the core (20) between the first and second positions and coaxial with the calibrator element (38), the latter being positioned in the blind hole (35) with clearance relative to a base (37) and to a side wall thereof.

**7.** A valve device according to Claims 1 to 6, **characterized in that** the support (41) of the calibrator element (38) is housed in an axial cavity (12) of the tubular body (8), is positioned parallel to the axis (X-X) of movement of the core (20) of the electromagnet, and is provided with means (49) for regulating its axial position relative to the core (20).

**8.** A valve device according to any one of Claims 1 to 7, **characterized in that** it comprises resilient means (29) acting on the core (20) of the electromagnet to urge it towards the second position (21) and to hold it therein when the coil of the electromagnet is not electrically activated, the resilient means (29) releasing the core (20) when the coil (19) is activated and the core (20) is moved axially to its first position (14).

**9.** A valve device according to Claim 8, **characterized in that** the core (20) is provided with an impact-absorbing pad (28) positioned in its end portion (27) facing towards the abutment (21).

**10.** A method of regulating the flow-rate of a gaseous fluid which is directed to a user and flows through a valve device as defined in claim 1, comprising the steps of:
- regulating the area of the cross-section for the flow of the fluid in the connecting path to a first value thereof;
- causing the gaseous fluid to flow through the cross-section of the connecting path, regulated to the first value, for a predetermined first period of time;
- varying the area of the flow cross-section in the connecting path by bringing it to a second value less than the first valuer and
- causing the gaseous fluid to flow through the cross-section provided with the second area value for a predetermined second period of time.

**11.** A method according to Claim 10, **characterized in that** it further comprises the further steps of returning the value of the area of the cross-section for the flow of the gaseous fluid in the connecting path from the second value to the first value and causing the gaseous fluid to flow through the cross-section with the first area value for a third predetermined period of time.

**12.** A method according to Claim 10 and Claim 11 wherein the third predetermined period of time has a duration equal to that of the first period of time.

**13.** A method according to Claims 10 to 12 wherein the gaseous fluid passing through the connecting path is compressed ambient air.
